# EUROPÄISCHE PATENTSCHRIFT

(11) **EP 1 301 722 B1**
(45) Veröffentlichungstag und Bekanntmachung des Hinweises auf die Patenterteilung: **13.07.2005**
(21) Anmeldenummer: 02742768.1
(22) Anmeldetag: 17.05.2002
(51) Int. Cl.: F16C 11/06

(54) **KUGELGELENK FÜR KRAFTFAHRZEUGE**
BALL AND SOCKET JOINT FOR MOTOR VEHICLES
JOINT A ROTULE POUR AUTOMOBILES

(30) Priorität: 22.05.2001 DE 10125232
(43) Veröffentlichungstag der Anmeldung: 16.04.2003
(73) Patentinhaber: ZF Lemförder Metallwaren AG, 49441 Lemförde (DE)
(72) Erfinder: ABELS, Olaf, 49191 Belm (DE)
(86) Internationale Anmeldenummer: PCT/DE2002/001832
(87) Internationale Veröffentlichungsnummer: WO 2002/095246

(56) Entgegenhaltungen:
- GB-A- 892 025
- US-A- 3 208 779
- US-A- 3 343 855
- US-A- 3 357 728
- US-A- 3 472 540
- US-A- 5 100 254
- US-B1- 6 357 956

## Beschreibung

Die Erfindung betrifft ein Kugelgelenk für Kraftfahrzeuge, welches einen Kugelzapfen aufweist, der zumindest aus einer in einer Lagerschale eines Gehäuses drehbar und/oder schwenkbar aufgenommenen Gelenkkugel und einem Zapfenabschnitt besteht. Darüber hinaus sind die inneren Gelenkbauteile des Kugelgelenkes durch einen Dichtungsbalg gegen das Eindringen von Verunreinigungen und Feuchtigkeit geschützt.

Der Dichtungsbalg gattungsgemäßer Kugelgelenke weist einen ersten Randbereich auf, welcher an dem Gehäuse befestigt ist. Ein zweiter Randbereich des Dichtungsbalges ist über eine Gleitverbindung mit einem auf dem Zapfenabschnitt des Kugelzapfens festgelegten Laufring verbunden. Ein derartiges Kugelgelenk für Kraftfahrzeuge geht beispielsweise aus der CH 465 971 hervor. Während der erste Randbereich des Dichtungsbalges durch wenigstens einen Spannring an dem Gehäuse des Kugelgelenkes befestigt ist, weist der zweite Randbereich eine Gleitverbindung auf. Diese ist bei der bekannten Ausführung insbesondere erforderlich, um bei Drehbewegungen des Kugelzapfens um seine Längsachse eine Relativbewegung zwischen Dichtungsbalg und Kugelzapfen zu ermöglichen. Ohne eine derartige Beweglichkeit würde der zumeist aus Gummi bestehende Dichtungsbalg unzulässig beansprucht und vorzeitig verschleißen, da Zugbelastungen eine den Gummi schädigende Wirkung haben können. Die Lebensdauer eines derartigen Kugelgelenkes wäre folglich reduziert.

Da Kugelgelenke für Radaufhängungen in Kraftfahrzeugen häufig im radnahen Bereich angebracht werden, wie dies bei Traggelenken oder Führungsgelenken der Fall ist, werden sie beispielsweise durch Öle, Fette, Schmutz, Spritzwasser und aggressive Medien, wie Salzlaugen extrem belastet.

Darüber hinaus ist bei einer Anbringung in der Nähe der Bremsscheibe eine hohe thermische Belastung zu berücksichtigen. Die Bremsscheibe wird während des Fahrbetriebes stark erhitzt und strahlt damit Wärme ab, die für die Gelenkbauteile eine extreme Beanspruchung darstellt. Aus diesem Grund ist es allgemein bekannt, Schutzmanschetten als Wärmeschutzschilde vorzusehen, die die empfindlichen Kugelgelenkbauteile gegen die Wärmestrahlung angrenzender Kraftfahrzeugbauteile schützen. Gleichzeitig können diese Schutzmanschetten zumindest in begrenztem Umfang Spritzwasser von den Kugelgelenken fernhalten. Wie eingangs bereits ausgeführt, ist es zum Ausgleich der Drehbewegungen des Kugelzapfens erforderlich, Laufringe für einen der Dichtungsbalgränder vorzusehen. Es besteht jedoch beim Einsatz von Laufringen ein weiteres Gefährdungspotential für die Gelenkbauteile, da ein Unterwandern dieser Laufringe mit Feuchtigkeit beziehungsweise durch aggressive Medien, beispielsweise durch Kriechen, dazu führen würde, dass insbesondere im Laufringbereich derartiger Kugelgelenke Korrosionserscheinungen auftreten könnten, was letztlich zu einer verkürzten Lebensdauer des Kugelgelenkes führen würde, weil durch die entstehende Korrosion in dem Kontaktbereich die Gelenkbauteile schneller verschleißen, als es erwünscht ist und damit das Eindringen von Feuchtigkeit und Verunreinigungen in die empfindlichen Gelenkbauteile im Innern des Kugelgelenkes nicht mehr zu verhindern wäre. Auch zusätzliche Abdichtungsmaßnahmen im Kontaktbereich Laufring/Kugelzapfen schließen diese Gefahr nicht vollständig aus. Insbesondere die Reinigung mit Hochdruckreinigungsgeräten stellt an die Abdichtung betroffener Baugruppen erhöhte Anforderungen.

Der Erfindung liegt die technische Problemstellung zu Grunde, ein Kugelgelenk zu entwickeln, das die empfindlichen Gelenkbauteile sowohl gegenüber Wärmestrahlungen als auch gegen Spritzwasser und korrosive Einflüsse verbessert schützt.

Diese technische Problemstellung wird mit den Merkmalen des Patentanspruches 1 gelöst. Weitere Ausgestaltungen der Erfindung sind Gegenstand der Unteransprüche.

Ein erfindungsgemäßes Kugelgelenk ist dementsprechend dadurch gekennzeichnet, dass zwischen einer Oberfläche des Laufringes und einer dieser zugewandten Oberfläche eines Kraftfahrzeugbauteiles, gegen welches sich der Laufring abstützt, eine Schutzmanschette eingesetzt ist.

Die Schutzmanschette dient dabei in an sich bekannter Weise zur Abschirmung der empfindlichen Kugelgelenkbauteile gegen Wärmestrahlungen und Spritzwassereinflüsse. Durch das Einsetzen der Schutzmanschette zwischen Laufring und Kraftfahrzeugbauteil wird zudem eine Abdichtung des Laufringbereiches erreicht, so dass in diesen Abschnitt keine Feuchtigkeit beziehungsweise keine Verunreinigungen mehr eindringen können. Das Kraftfahrzeugbauteil, welches unter anderem zur Anlage des Laufringes beziehungsweise zur Halterung der Schutzmanschette dient, kann beispielsweise ein Hebelauge einer Radaufhängung sein.

Durch eine erfindungsgemäße Ausführung eines Kugelgelenkes wurde eine sehr einfache und damit kostengünstige Variante geschaffen, die das Kugelgelenk in wirksamer Weise schützt und damit seine Lebensdauer insgesamt erhöht. Zusätzliche aufwendige Dichtmaßnahmen der kritischen Laufringabschnitte sind vermeidbar, so dass beispielsweise eine gesonderte Beschichtung des Laufringes entfallen kann. Ein erfindungsgemäßes Kugelgelenk zeichnet sich durch herausragende Wärme-, Spritzwasser- und Korrosionsbeständigkeit aus.

Gemäß einer Ausgestaltung der Erfindung wird vorgeschlagen, zumindest einen Abschnitt der Schutzmanschette durch eine Klemmverbindung zwischen der Oberfläche des Kraftfahrzeugbauteiles und der zugeordneten Oberfläche des Laufringes herzustellen.

Jedoch kann gemäß weiterer Ausgestaltungen der Erfindung ebenso eine formschlüssige oder stoffschlüssige Verbindung zwischen Laufring und Schutzmanschette vorgesehen werden. Gedacht ist hierbei beispielsweise an Klebeverbindungen oder ein Vulkanisationsverfahren.

Um eine bestmögliche Abdichtung der beweglichen Kugelgelenkbauteile zu ermöglichen, wird darüber hinaus vorgeschlagen, dass die topfförmige Schutzmanschette in Umfangsrichtung des Kugelgelenkes wenigstens einen Teil des Kugelgelenkes umgibt und den Dichtungsbalg in Längsrichtung des Kugelgelenkes weitgehend abdeckt. Dabei ist der unmittelbare Anlagebereich zwischen Schutzmanschette und Kraftfahrzeugbauteil von entscheidender Bedeutung für die Dichtwirkung des Gesamtsystems. Selbstverständlich kann die Schutzmanschette in Umfangsrichtung gesehen das gesamte Kugelgelenk umgeben.

Um die Verbindungsmöglichkeiten zwischen Laufring und Schutzmanschette beziehungsweise die abdichtende Anlage der Schutzmanschette zwischen den einander zugeordneten Bauteielen zu verbessern, sollte die Schutzmanschette vorzugsweise aus einem hochtemperaturbeständigen Kunststoff, Gummi oder Kautschuk hergestellt sein. Geeignet könnten Werkstoffe, wie EPDM-Kautschuk oder Silikonkautschuk sein. Durch Emsatz eher weicher oder elastischer Werkstoffe ist es möglich, eine sehr dichte Verbindung herzustellen, weil somit ein zumindest teilweises Einprägen des Laufringes in den Randbereich der Schutzmanschette erreicht wird und sich diese gleichzeitig optimiert an die Oberfläche des zugeordneten Kraftfahrzeugbauteiles anlegt. Der Laufring kann vorzugsweise aus nicht rostendem oder oberflächengeschütztem Metall beziehungsweise aus Kunststoff oder einem Verbundwerkstoff aus Metall und Kunststoff gefertigt werden.

Um einen Festsitz des Laufringes am Kugelzapfen einerseits und eine sinnvolle Abstützung des Laufringes an dem zugeordneten Kraftfahrzeugbauteil andererseits zu gewährleisten, wird gemäß einer Weiterbildung der Erfindung vorgeschlagen, den Laufring zumindest mit zwei im Querschnitt gesehen einen Winkel miteinander einschließenden Bunden auszuführen. Bevorzugt werden diese Bunde etwa rechtwinklig zueinander verlaufen. Dabei ist der erste Bund festsitzend auf dem Zapfenabschnitt angeordnet und der zweite Bund stützt sich mit seiner dem Kraftfahrzeugbauteil zugewandten Oberfläche elastisch gegen die zugeordnete Oberfläche des Kraftfahrzeugbauteiles ab.

Es ist einem weiteren Vorschlag der Erfindung folgend von Vorteil, wenn der zweite Bund des Laufringes zumindest auf seiner dem Kraftfahrzeugbauteil zugewandten Oberfläche eine Senke aufweist. Diese Senke dient dazu, einen Randabschnitt der Schutzmanschette aufzunehmen. Bei dieser Verbindung von Laufring und Schutzmanschette bietet sich eine Klemmverbindung zwischen Laufring und zugeordneter Oberfläche des Kraftfahrzeugbauteiles in vorteilhafter Weise an. Mittels der genannten Klemmverbindung wird die Schutzmanschette in der Senke des Laufringes gehalten. Die Montage dieses Systems ist relativ einfach und hat zudem den Vorteil, dass beispielsweise die Manschette jederzeit auswechselbar ist.

Um das Dichtsystem des Kugelgelenkes gemäß der vorgeschlagenen Erfindung insgesamt zu optimieren, können darüber hinaus weitere Maßnahmen vorgesehen sein. So ist es im Sinne der Erfindung möglich, den zweiten Randbereich des Dichtungsbalges an zumindest einer seiner Kontaktflächen mit dem Laufring mit einer Labyrinthdichtung auszustatten. Die Verbesserung der Anlage des Randbereich des Dichtungsbalges im Laufring kann ferner mittels eines an sich bekannten Spannringes erfolgen, welcher den Randbereich des Dichtungsbalges gegen den Laufring vorspannt.

Um zu vermeiden, dass der Randbereich des Dichtungsbalges in Richtung Gelenkkugel des Kugelzapfens wegrutscht und sich somit selbsttätig aus dem Laufring löst, wird ferner empfohlen, einen Haltering zwischen dem Laufring und einer Kehlung der Gelenkkugel anzuordnen. Die Kehlung der Gelenkkugel befindet sich im Übergangsbereich zwischen dem Zapfenabschnitt des Kugelzapfens und der an diesem angeformten beziehungsweise angebrachten Gelenkkugel.

Entsprechend einer Weiterbildung kann selbstverständlich dieser Haltering mit dem Laufring einteilig ausgeführt sein. Der Einlagebereich des Laufringes für den Randbereich des Dichtungsbalges würde dementsprechend im Querschnitt betrachtet annähernd eine U-förmige Gestalt aufweisen, so dass der Randbereich des Dichtungsbalges in dem Laufring gleitend aufgenommen und gegen selbsttätiges axiales Verrutschen gesichert wäre.

Eine bevorzugte Ausführungsform eines erfindungsgemäßen Kugelgelenkes für Kraftfahrzeuge wird nachstehend unter Bezugnahme auf die zugehörige Zeichnung näher erläutert.

Es zeigt:

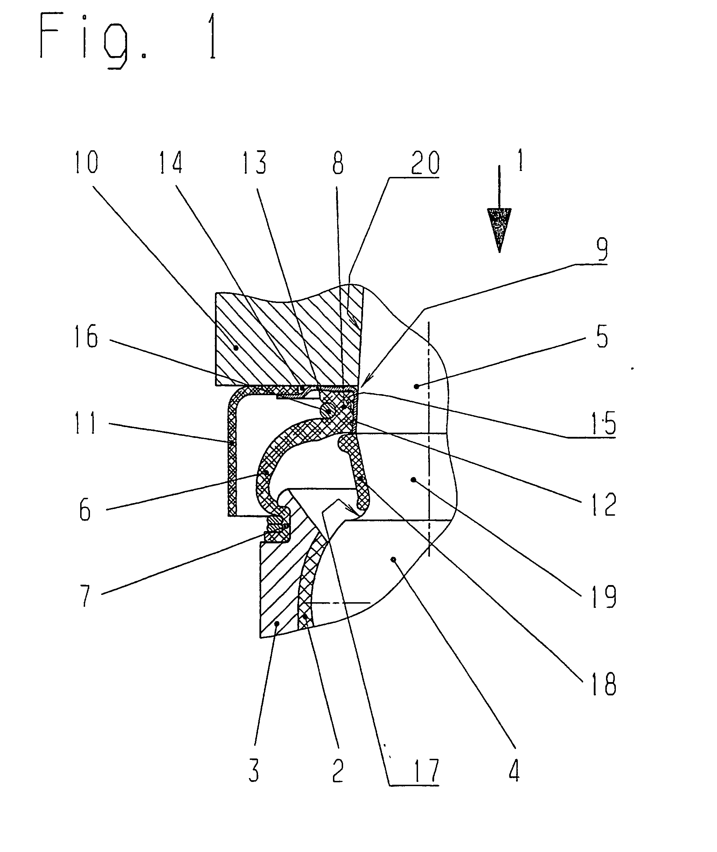

Figur 1: ausschnittsweise ein erfindungsgemäßes Kugelgelenk im Längsschnitt.

In der Zeichnung ist ein Kugelgelenk für Kraftfahrzeuge dargestellt, das einen Kugelzapfen 1 aufweist. Dieser Kugelzapfen geht von einem Zapfenabschnitt 5 mit zylindrischem beziehungsweise leicht konischem Querschnitt über einen Halsabschnitt 19 in eine Gelenkkugel 4 über. Zwischen Halsabschnitt 19 und Gelenkkugel 4 ist eine Kehlung 17 vorhanden.
Die Gelenkkugel 4 stützt sich in mehreren Richtungen gleitbeweglich in einer Lagerschale 2 ab. Die Lagerschale ist ihrerseits in einem Gehäuse 3 des Kugelgelenkes aufgenommen. Der konische Zapfenabschnitt 5 des Kugelzapfens 1 ist in eine als Bohrung ausgeführte Aufnahme 20 eines Kraftfahrzeugbauteiles 10 eingesetzt. Mittels eines in der Figur nicht dargestellten auf der der Gelenkkugel gegenüberliegenden Seite des Kugelzapfens 1 angebrachten Gewindeabschnittes kann das Kugelgelenk insgesamt an dem Kraftfahrzeugbauteil 10 befestigt werden. Während der Montage wird dabei der konische Teil des Zapfenabschnittes 5 in Längsrichtung des Kugelzapfens 1 in die Aufnahme 20 des Kraftfahrzeugbauteiles 10 hineingezogen bis ein ausreichender Festsitz gewährleistet ist.

Am Ende des konischen Zapfenabschnittes 5 des Kugelzapfens 1, also unmittelbar vor dem Übergang zum Halsabschnitt 19, ist auf dem Kugelzapfen ein Laufring 9 festsitzend angeordnet. Dieser Laufring 9 besteht aus einem ersten Bund 12, welcher unmittelbar auf dem Kugelzapfen 1 aufgesetzt ist und einem im Querschnitt betrachtet etwa rechtwinklig davon abstehenden zweiten Bund 13. Dieser zweite Bund 13 des Laufringes 9 stützt sich elastisch gegen eine zugeordnete Oberfläche des Kraftfahrzeugbauteiles 10 ab.

Während des zuvor beschriebenen Montagevorganges, das heißt während des Einbaus des Kugelgelenkes in das zugehörige Kraftfahrzeugbauteil 10, legt sich der zweite Bund 13 des Laufringes 9 elastisch an das Kraftfahrzeugbauteil 10 an. Im vorderen, dem Kugelzapfen 1 abgewandten Bereich des zweiten Bundes 13 des Laufringes 9 weist dieser eine Senke 14 auf. In die Senke 14 ist vorliegend ein ringförmiger Abschnitt einer Schutzmanschette 11 eingesetzt. Durch die elastische Abstützung des zweiten Bundes 13 des Laufringes 9 an dem Kraftfahrzeugbauteil 10 wird eine Klemmverbindung zwischen dem zweiten Bund 13 und dem Kraftfahrzeugbauteil 10 erreicht, mittels derer der Randabschnitt der Schutzmanschette gehalten ist.
Die Schutzmanschette besteht bei der gezeigten Ausführung aus hochtemperaturbeständigem Gummi, so dass die Klemmverbindung eine abdichtende und sehr festsitzende Befestigung für das dargestellte Ausführungsbeispiel gewährleistet. Die Schutzmanschette 11 weist insgesamt einen topfförmigen Aufbau auf und umgibt einen Großteil des Kugelgelenkes in Umfangsrichtung. In Längsrichtung des Kugelzapfens gesehen, deckt die Schutzmanschette 11 zumindest den Bereich des Dichtungsbalges 6 ab.

Der Dichtungsbalg 6, welcher zur Abdichtung der inneren Gelenkbauteile des Kugelgelenkes dient, besteht aus einem ersten Randbereich 7, der mittels einer Spannringverbindung festsitzend in einer Nut des Gehäuses 3 angeordnet ist und einem zweiten Randbereich 8, welcher eine Gleitverbindung mit dem Laufring 9 aufweist. Die Kontaktpaarung zwischen dem zweitem Randbereich 8 des Dichtungsbalges 6 und der Innenoberfläche des Laufringes 9 ist dabei in Form einer Labyrinthdichtung 15 ausgeführt. Bei dem dargestellten Ausführungsbeispiel eines Kugelgelenkes ist die am Randbereich 8 des Dichtungsbalges 6 vorhandene Labyrinthdichtung 15 nur an einer Seite vorhanden. Zur Verbesserung der Anlage und damit der Abdichtfunktion des Randbereich 8 des Dichtungsbalges 6 am Laufring 9 wird ein Spannring 16 verwendet. Dieser spannt den Randbereich 8 des Dichtungsbalges 6 gegen die Laufringoberfläche vor. Bei dem in der Figur 1 gezeigten Ausführungsbeispiel eines Laufringes 9, welcher zwei im Querschnitt rechtwinklig zueinander angeordnete Bunde aufweist, wäre es möglich, dass der Randbereich 8 des Dichtungsbalges 6 in axialer Richtung, also in Richtung auf die Gelenkkugel hin, aus dem Laufring 9 herausrutscht. Um dies wirksam zu verhindern, wird ein Haltering 18 zwischen dem Laufring 9 und einer Kehlung 17 im Übergangsbereich zwischen Halsabschnitt 19 und Gelenkkugel 4 des Kugelzapfens 1 vorgesehen. Laufring 9 und Haltering 18 sind hierbei als separate Teile ausgeführt. Selbstredend kann der Laufring 9 auch im Querschnitt U-förmig ausgeführt werden oder ist es möglich, den Haltering 18 mit dem Laufring 9 einteilig auszuführen.

### Bezugszeichenliste:

- 1: Kugelzapfen
- 2: Lagerschale
- 3: Gehäuse
- 4: Gelenkkugel
- 5: Zapfenabschnitt
- 6: Dichtungsbalg
- 7: Erster Randbereich
- 8: Zweiter Randbereich
- 9: Laufring
- 10: Kraftfahrzeugbauteil
- 11: Schutzmanschette
- 12: Erster Bund
- 13: Zweiter Bund
- 14: Senke
- 15: Labyrinthdichtung
- 16: Spannring
- 17: Kehlung
- 18: Haltering
- 19: Halsabschnitt
- 20: Aufnahme

## Patentansprüche

1. Kugelgelenk für Kraftfahrzeuge mit:
- einem Kugelzapfen (1), der zumindest aus einer in einer Lagerschale (2) eines Gehäuses (3) drehbar und/oder schwenkbar aufgenommenen Gelenkkugel (4) und einem Zapfenabschnitt (5) besteht,
- einem Dichtungsbalg (6), dessen erster Randbereich (7) an dem Gehäuse (3) befestigt ist und dessen zweiter Randbereich (8) eine Gleitverbindung mit einem auf dem Zapfenabschnitt (5) festgelegten Laufring (9) aufweist,
**dadurch gekennzeichnet, dass**
zwischen einer Oberfläche des Laufringes (9) und der dieser zugewandten Oberfläche eines Kraftfahrzeugbauteiles (10) eine Schutzmanschette (11) eingesetzt ist.

2. Kugelgelenk nach Anspruch 1
**dadurch gekennzeichnet, dass**
zumindest ein Abschnitt der Schutzmanschette (11) zwischen der Oberfläche des Kraftfahrzeugbauteiles (10) und dem Laufring klemmend gehalten ist.

3. Kugelgelenk nach Anspruch 1
**dadurch gekennzeichnet, dass**
zumindest ein Abschnitt der Schutzmanschette (11) eine formschlüssige oder stoffschlüssige Verbindung mit dem Laufring (9) aufweist.

4. Kugelgelenk nach einem der vorstehend genannten Ansprüche,
**dadurch gekennzeichnet, dass**
die topfförmige Schutzmanschette (11) in Umfangsrichtung des Kugelgelenkes zumindest einen Teil des Kugelgelenkes umgibt und den Dichtungsbalg (6) in Längsrichtung des Kugelgelenkes weitgehend abdeckt.

5. Kugelgelenk nach einem der vorstehend genannten Ansprüche,
**dadurch gekennzeichnet, dass**
die Schutzmanschette (11) aus einem hochtemperaturbeständigen Kunststoff, Gummi oder Kautschuk und der Laufring (9) aus nichtrostendem oder oberflächengeschütztem Metall, aus Kunststoff oder aus einem Verbundwerkstoff aus Metall und Kunststoff besteht.

6. Kugelgelenk nach einem der vorstehend genannten Ansprüche,
**dadurch gekennzeichnet, dass**
der Laufring (9) zumindest zwei einen Winkel miteinander einschließende Bunde (12, 13) aufweist.

7. Kugelgelenk nach Anspruch 6,
**dadurch gekennzeichnet, dass**
der Laufring (9) zwei im Querschnitt etwa rechtwinklig zueinander angeordnete Bunde (12, 13) aufweist, wobei der erste Bund (12) festsitzend auf dem Zapfenabschnitt (5) angeordnet ist und der zweite Bund (13) sich elastisch gegen die Oberfläche des Kraftfahrzeugbauteiles (10) abstützt.

8. Kugelgelenk nach Anspruch 7,
**dadurch gekennzeichnet, dass**
der zweite Bund (13) eine Senke (14) aufweist, die einen Randabschnitt der Schutzmanschette (11) aufnimmt.

9. Kugelgelenk nach einem der vorstehend genannten Ansprüche,
**dadurch gekennzeichnet, dass**
der zweite Randbereich (8) des Dichtungsbalges (6) an zumindest einer an dem Laufring (9) anliegenden Kontaktfläche eine Labyrinthdichtung (15) aufweist.

10. Kugelgelenk nach einem der vorstehend genannten Ansprüche,
**dadurch gekennzeichnet, dass**
der zweite Randbereich (8) des Dichtungsbalges (6) mittels eines Spannringes (16) gegen den Laufring (9) vorgespannt ist.

11. Kugelgelenk nach einem der vorstehend genannten Ansprüche,
**dadurch gekennzeichnet, dass**
das Kugelgelenk eine Axialsicherung des Laufringes (9) aufweist, die aus einem zwischen dem Laufring (9) und einer Kehlung (17) der Gelenkkugel (4) angeordneten Haltering (18) besteht.

12. Kugelgelenk nach Anspruch 11,
**dadurch gekennzeichnet, dass**
der Haltering (18) einteilig mit dem Laufring (9) ausgeführt ist.

## Claims

1. Ball-and-socket joint for motor vehicles, with:
- a ball pin (1) which consists at least of a joint ball (4), rotatably and/or pivotably held in a bearing shell (2) of a housing (3), and a pin portion (5),
- sealing bellows (6), the first edge region (7) of which is fastened to the housing (3) and the second edge region (8) of which is connected via a sliding connection to a race (9) which is secured to the pin portion (5),
**characterised in that**
a protective sleeve (11) is inserted between a surface of the race (9) and the surface, facing the latter, of a motor vehicle component (10).

2. Ball-and-socket joint according to Claim 1,
**characterised in that**
at least a portion of the protective sleeve (11) is retained in clamping fashion between the surface of the motor vehicle component (10) and the race.

3. Ball-and-socket joint according to Claim 1,
**characterised in that**
at least a portion of the protective sleeve (11) is positively or integrally connected to the race (9).

4. Ball-and-socket joint according to any one of the preceding Claims,
**characterised in that**
the pot-shaped protective sleeve (11) surrounds at least a part of the ball-and-socket joint in the circumferential direction of the latter and largely covers the sealing bellows (6) in the longitudinal direction of the ball-and-socket joint.

5. Ball-and-socket joint according to any one of the preceding Claims,
**characterised in that**
the protective sleeve (11) consists of a high-temperature-resistant plastics material or rubber and the race (9) of rust-resistant or surface-protected metal, of a plastics material or of a composite consisting of metal and a plastics material.

6. Ball-and-socket joint according to any one of the preceding Claims,
**characterised in that**
the race (9) comprises at least two collars (12, 13) forming an angle with one another.

7. Ball-and-socket joint according to Claim 6,
**characterised in that**
the race (9) comprises two collars (12, 13) disposed approximately at a right angle to one another, wherein the first collar (12) is disposed with a tight fit on the pin portion (5) and the second collar (13) is resiliently supported against the surface of the motor vehicle component (10).

8. Ball-and-socket joint according to Claim 7,
**characterised in that**
the second collar (13) comprises a depression (14) which holds an edge portion of the protective sleeve (11).

9. Ball-and-socket joint according to any one of the preceding Claims,
**characterised in that**
the second edge region (8) of the sealing bellows (6) comprises a labyrinth seal (15), at least at one contact face abutting against the race (9).

10. Ball-and-socket joint according to any one of the preceding Claims,
**characterised in that**
the second edge region (8) of the sealing bellows (6) is preloaded against the race (9) by means of a clamping ring (16).

11. Ball-and-socket joint according to any one of the preceding Claims,
**characterised in that**
the ball-and-socket joint comprises a means for axially securing the race (9), which means consists of a retaining ring (18) disposed between the race (9) and a throat (17) of the joint ball (4).

12. Ball-and-socket joint according to Claim 11,
**characterised in that**
the retaining ring (18) is integral with the race (9).

## Revendications

1. Joint à rotule pour véhicules automobiles, comportant :
- un embout (1) à rotule, qui est constitué au moins par une rotule (4) logée de manière à pouvoir tourner et/ou à pouvoir pivoter dans un coussinet de palier (2) d'un boîtier (3), et par une section en forme d'embout (5),
- un soufflet d'étanchéité (6), dont la première partie de bord (7) est fixée sur le boîtier (3) et dont la seconde partie de bord (8) comporte une liaison glissante avec une bague de glissement (9) fixée sur la section en forme d'embout (5),
**caractérisé en ce que**
un manchon de protection (11) est inséré entre une surface de la bague de glissement (9) et la surface, tournée vers cette dernière, d'un composant (10) du véhicule automobile.

2. Joint à rotule selon la revendication 1, **caractérisé en ce qu'**au moins une section du manchon de protection (11) est retenue à l'état serré entre la surface du composant (10) du véhicule automobile et la bague de glissement.

3. Joint à rotule selon la revendication 1, **caractérisé en ce qu'**au moins une section du manchon de protection (11) possède une liaison par formes complémentaires ou par matériaux complémentaires avec la bague de glissement (9).

4. Joint à rotule selon l'une des revendications précédentes, **caractérisé en ce que** le manchon de protection en forme de pot (11) entoure, au moins dans la direction circonférentielle du joint à rotule, au moins une partie du joint à rotule et recoupe dans une large mesure le soufflet d'étanchéité (6) dans la direction longitudinale du joint à rotule.

5. Joint à rotule selon l'une des revendications précédentes, **caractérisé en ce que** le manchon de protection (11) est formé par une matière plastique, du caoutchouc ou du caoutchouc synthétique résistant à des températures élevées et que la bague de glissement (9) est réalisée en un métal inoxydable ou pourvue d'une protection de surface, en matière plastique ou en un matériau composite formé d'un métal et d'une matière plastique.

6. Joint à rotule selon l'une des revendications précédentes, **caractérisé en ce que** la bague de glissement (9) comporte au moins deux collets (12,13) qui font entre eux un angle.

7. Joint à rotule selon la revendication 6, **caractérisé en ce que** la bague de glissement (9) comporte deux collets (12,13), qui sont disposés approximativement perpendiculairement entre eux en coupe transversale, le premier collet (12) étant monté de façon fixe sur la section formant embout (5) et le second collet (13) prenant appui élastiquement contre la surface du composant (10) du véhicule automobile.

8. Joint à rotule selon la revendication 7, **caractérisé en ce que** le second collet (13) comporte un renfoncement (14), qui loge une section de bord du manchon de protection (11).

9. Joint à rotule selon l'une des revendications précédentes, **caractérisé en ce que** la seconde partie de bord (8) du soufflet d'étanchéité (6) possède une garniture d'étanchéité à labyrinthe (15) sur au moins une surface de contact appliquée contre la bague de glissement (9).

10. Joint à rotule selon l'une des revendications précédentes, **caractérisé en ce que** la seconde partie de bord (8) du soufflet d'étanchéité (6) est précontrainte à l'aide d'une bague de serrage (16) contre la bague de glissement (9).

11. Joint à rotule selon l'une des revendications précédentes, **caractérisé en ce que** le joint à rotule comporte un dispositif de blocage axial de la bague de glissement (9), qui est constitué par une bague de retenue (18) disposée entre la bague de glissement (9) et une gorge (17) de la rotule (4).

12. Joint à rotule selon la revendication 11, **caractérisé en ce que** la bague de retenue (18) est réalisée d'un seul tenant avec la bague de glissement (9).
